# EUROPÄISCHE PATENTSCHRIFT

(11) **EP 1 894 831 B1**
(45) Veröffentlichungstag und Bekanntmachung des Hinweises auf die Patenterteilung: **11.11.2009**
(21) Anmeldenummer: 07016148.4
(22) Anmeldetag: 17.08.2007
(51) Int. Cl.: B62L 3/02, B60K 15/04, B60T 11/232, B60T 11/26, F16D 65/14

(54) **Bremssystem mit einer hydraulischen Bremsanlage**
Brake device with hydraulic brake system
Dispositif de freinage avec un système hydraulique de freinage

(30) Priorität: 29.08.2006 DE 102006040327
(43) Veröffentlichungstag der Anmeldung: 05.03.2008
(73) Patentinhaber: Gustav Magenwirth GmbH & Co. KG, 72574 Bad Urach (DE)
(72) Erfinder: Ruckh, Stefan, 72587 Römerstein/Zainingen (DE); Beier, Jürgen, 89081 Ulm (DE)
(74) Vertreter: Maucher, Wolfgang

(56) Entgegenhaltungen:
- EP-A- 0 345 102
- US-A- 2 316 497
- US-B1- 6 298 961

## Beschreibung

Die Erfindung bezieht sich auf ein Bremssystem mit einer hydraulischen Bremsanlage für Zweiräder, insbesondere Fahrräder, wobei die Bremsanlage ein mit Hydraulikflüssigkeit gefülltes Gebersystem und eine hydraulisch damit verbundene Bremsvorrichtung aufweist, wobei das Gebersystem einen Ausgleichsbehälter und eine Befüll- und Entlüftungsöffnung aufweist.

Ein solches Gebersystem weist ein Gehäuse auf, das als Teil eines Hauptzylinders einen Geberkolben-Zylinder und einen darin geführten Geberkolben, der mittels eines Handhebels betätigbar ist, beinhaltet. Außerdem weist das Gebersystem den mit Hydraulikflüssigkeit gefüllten Ausgleichsbehälter als Reservekammer und für einen Volumenausgleich bei Erwärmung und Abkühlung der Hydraulikflüssigkeit auf.
Ein Bremssystem mit einem solchen Ausgleichsbehälter und den Merkmalen des Oberbegriffs von Anspruch 1 ist beispielsweise aus der US 6,298,961 B1 bekannt. Der Ausgleichsbehälter weist eine Befüll- und Entlüftungsöffnung auf, durch die Hydraulikflüssigkeit nachgefüllt oder das System entlüftet werden kann. Dazu ist in dem Deckel des Ausgleichsbehälters ein Ventil angeordnet, auf das ein Entlüftungs- oder Befüllwerkzeug dicht auf den Ausgleichsbehälter aufsetzbar ist.

Das Gehäuse des Gebersystems mit Ausgleichsbehälter wird häufig in Druckgusstechnik oder Spritzgießtechnik hergestellt. Das dafür erforderliche Formwerkzeug muss entsprechend den vorgesehenen Höhlungen im Geber-Gehäuse ausgebildet sein. Bei bekannten Bremsanlagen sind die Innenhöhlungen und dabei auch die mit dem Ausgleichsbehälter in Verbindung stehende Befüll- und Entlüftungsöffnung so im Geber-Gehäuse angeordnet, dass diese sowie davon ausgehende Verbindungskanäle zum Ausgleichsbehälter gießtechnisch schwierig herstellbar sind.

Aufgabe der vorliegenden Erfindung ist es, bei einem Bremssystem der eingangs genannten Art die Befüll- und Entlüftungsöffnung des Ausgleichsbehälters und die anschließenden Verbindungskanäle so anzuordnen, dass einerseits eine einfache Herstellung des Geber-Gehäuses und damit verbundener Teile begünstigt ist und dass andererseits eine einfache und unter Vermeidung von Verunreinigung der Umgebung mit Hydraulikflüssigkeit - sabberfreie - Befüllung und Entlüftung des Bremssystems möglich ist.

Zur Lösung dieser Aufgabe wird vorgeschlagen, dass die Befüll- und Entlüftungsöffnung einen in einem Deckel des Ausgleichsbehälters angeordneten Einsteckabschnitt zur dichten Aufnahme eines Entlüftungs- und Befüllwerkzeugs aufweist, an den sich in Einsteckrichtung eine Anschlusskammer im Gebergehäuse anschließt, die eine seitliche Begrenzungswand zum Ausgleichsbehälter hat und dass in der Begrenzungswand wenigstens eine randoffene Überströmöffnung als Strömungsdurchtritt zum Ausgleichsbehälter vorgesehen ist.

Die Befüll- und Entlüftungsöffnung ist also im Bereich des Deckels des Ausgleichsbehälters angeordnet und somit an der Oberseite des Gebersystems, wodurch von vorne herein eine für das Befüllen und Entlüften günstige Position gegeben ist. Der Einsteckabschnitt im Deckel ist eine Durchgangsöffnung, die bei der Herstellung des Deckels in einem Formwerkzeug durch einen komplementär geformten Stift einfach herstellbar ist. Auch die Anschlusskammer im Gebergehäuse lässt sich einfach durch einen Formstift einformen. Beide Abschnitte der Befüll- und Entlüftungsöffnung sind zweckmäßigerweise in Entformungsrichtung des Formwerkzeugs orientiert, so dass ein problemloses Entformen möglich ist.
Auch die randoffene Überströmöffnung, die ebenfalls in Entformungsrichtung orientiert ist, trägt mit zu einem einfachen Aufbau des Formwerkzeugs bei. Komplizierte Hilfseinrichtungen im Formwerkzeug sind somit nicht erforderlich, so dass eine besonders kostengünstige Herstellung der Teile möglich ist.

In dem Einsteckabschnitt im Deckel wird das Entlüftungs- und Befüllwerkzeug nach dem Einstecken sicher gehalten und über die Anschlusskammer und die Überströmöffnung ist auf einfache Weise eine Strömungsverbindung zum Ausgleichsbehälter vorhanden.
Durch die sichere Halterung des Entlüftungs- und Befüllwerkzeugs wird beim Entleeren, Befüllen und Entlüften des Hydrauliksystem erreicht, dass keine Bremsflüssigkeit beziehungsweise Hydraulikflüssigkeit austritt und an Fahrzeugteilen Beschädigungen hervorruft oder diese unbrauchbar macht. Auch wird so ein Hautkontakt mit Hydraulikflüssigkeit sicher vermieden. Aus den vorgenannten Gründen wird bisher für den Umgang mit Bremsflüssigkeit beim Befüllen und Entlüften eine vergleichsweise umfangreiche, umständlich zu handhabende Ausrüstung eingesetzt, die einem ungeübten Benutzer Probleme bereiten kann.

Zweckmäßigerweise ist der Einsteckabschnitt der Befüll- und Entlüftungsöffnung zur dichten Aufnahme eines Anschlussstutzens des Entlüftungs- und Befüllwerkzeugs ausgebildet, wobei der Anschlussstutzen in Anschlusslage in die Anschlusskammer ragt und wobei die Anschlusskammer lichte Innenabmessungen hat, die größer sind als das hineinragende Teil des Anschlussstutzens.
Dadurch ist in der Anschlusskammer um den Anschlussstutzen genügend Platz vorhanden, dass das Fluid (Hydraulikflüssigkeit, Luft) über die Überströmöffnung zur Anschlusskammer und umgekehrt gelangen kann.

Besonders vorteilhaft ist es, wenn die randoffene Überströmöffnung in der Begrenzungswand der Anschlusskammer in schräger Betriebsposition des entsprechend verstellbaren Gebersystems in einem der höchsten Stelle der seitlichen Begrenzungswand beabstandeten, tiefer liegenden Bereich angeordnet ist.
Dadurch bildet die Anschlusskammer eine Luftfalle für in der Hydraulikflüssigkeit befindliche Luftbläschen. Diese bleiben durch die tiefere Anordnung der Überströmöffnung in Relation zu der höchsten Stelle des Innenraums der Anschlusskammer in dieser gefangen und können nicht in den Ausgleichsbehälter und den weiteren Hydraulikkreislauf gelangen.

Nach einer Ausführungsform können zwei vorzugsweise etwa gegenüberliegend angeordnete, randoffene Überströmöffnungen in der Begrenzungswand vorgesehen sein. Diese sind dann zweckmäßigerweise jeweils zur höchsten Stelle des Innenraums der Anschlusskammer um etwa 90° oder mehr versetzt positioniert.

Nach einer vorteilhaften Weiterbildung der Erfindung sind die in der Begrenzungswand der Anschlusskammer angeordneten Überströmöffnungen als schmale Randschlitze ausgebildet, wobei die Schlitzbreite zum Zurückhalten von in der Hydraulikflüssigkeit enthaltenen Luftblasen dimensioniert ist. Zurückgehalten werden dabei Luftbläschen, die insbesondere schwerkraftbedingt in der Hydraulikflüssigkeit aufsteigen.
Nach einer Ausführungsform der Erfindung ist vorgesehen, dass der den Ausgleichsbehälter überdeckende und randseitig auf dem Gehäuse abdichtend aufliegende Deckel seitlich neben dem Ausgleichsbehälter den Einsteckabschnitt für das Entlüftungs- und Befüllwerkzeug aufweist und dass sich die in Einsteckrichtung anschließende, napfförmige Anschlusskammer im Gebergehäuse befindet.
Dabei befindet sich die Befüll- und Entlüftungsöffnung auf der Seite neben dem Ausgleichsbehälter, die sich in einer schrägen Befüll- und Entlüftungsposition in erhöhter Lage befindet, weil dadurch einerseits das Entlüften begünstigt ist und andererseits ein Auslaufen von Fluid beim An- und Abdocken des Entlüftungs- und Befüllwerkzeugs vermieden wird.

Die Anschlusskammer ist bei der vorgenannten Ausführungsform in einer in den Ausgleichsbehälter ragenden Ausbuchtung des Gebergehäuses angeordnet, so dass die seitliche Begrenzungswand bereichsweise direkt an den Ausgleichsbehälter anschließt. Durch die Ausbuchtung sind seitliche Wandbereiche vorhanden, in denen die Überströmöffnungen beabstandet zum am weitesten in den Ausgleichsbehälter ragenden Wandbereich angeordnet werden können.

Nach einer anderen Ausführungsform der Erfindung ist vorgesehen, dass die Befüll- und Entlüftungsöffnung in dem den Ausgleichsbehälter überdeckenden Bereich des Deckels angeordnet ist, wobei der Einsteckabschnitt den Deckel durchsetzt und wobei sich die in Einsteckrichtung dicht anschließende Anschlusskammer im Gebergehäuse in einem innerhalb des Ausgleichsbehälters befindlichen Gehäusevorsprung befindet.
Diese Ausführungsform kann unter anderem dann vorgesehen sein, wenn seitlich neben dem Ausgleichsbehälter beziehungsweise dem ihn oberseitig abdichtenden Deckel kein Platz für die Befüll- und Entlüftungsöffnung vorhanden ist. Der Gehäusevorsprung kann sich dabei inselförmig vom Boden des Ausgleichsbehälters zur Deckelinnenseite erstrecken, wobei sich die Anschlusskammer im oberen Ende befindet und dicht an den Einsteckabschnitt im Deckel anschließt. Die Überströmöffnung oder auch mehrere Überströmöffnungen befinden sich auch hierbei im oberen Rand der Anschlusskammer und sind so positioniert, dass in Betriebsposition, wo das Gebersystem schräg stehend, einseitig abgesenkt ist, in der Anschlusskammer befindliche Luftbläschen nicht über die Überströmöffnung(en) in den Ausgleichsbehälter gelangen können.

Um die unterschiedlichen Positionen des Gebersystems einstellen zu können, ist dieses mittels einer Halterung mit einem Teil des Zweirads, vorzugsweise dem Lenker verdrehbar verbunden. Die Halterung ist zum Verstellen des Gebersystems zumindest einerseits in eine Befüll- und Entlüftungsposition und andererseits in eine Betriebsposition ausgebildet. In der Befüll- und Entlüftungsposition befindet sich die Befüll- und Entlüftungsöffnung in oberster Position des Hydrauliksystems.

Zweckmäßigerweise ist zwischen dem Ausgleichsbehälter und dem ihn oberseitig abdichtenden Deckel eine Dichtung vorgesehen, die sich in den Bereich zwischen dem Einsteckabschnitt und der sich anschließenden Anschlusskammer der Befüll- und Entlüftungsöffnung erstreckt. Damit ist sowohl eine Abdichtung zwischen dem Ausgleichsbehälter und dem Deckel als auch zwischen dem Einsteckabschnitt und der Anschlusskammer der Befüll- und Entlüftungsöffnung vorhanden.

Die Dichtung ist vorteilhafterweise zumindest im Auflagebereich auf der Begrenzungswand der Anschlusskammer aufgedickt, wobei der ihr zugewandte, den Einsteckabschnitt umgebende Deckelbereich eine Ringnut zur dichtenden Aufnahme der Dichtung beziehungsweise des aufgedickten Dichtungsbereichs hat. Die Dichtung hat durch die Aufdickung eine erhöhte Eigenstabilität, so dass auch im Überdeckungsbereich der Dichtung über der oder den randoffenen Überströmöffnungen eine gute Abdichtung gegeben ist.

Zweckmäßigerweise ist in dem Ausgleichsbehälter ein elastischer Balg eingesetzt, der vorzugsweise durch einen gummielastischen Formkörper gebildet ist und der zumindest einen umlaufenden Seitenflansch als Dichtung zwischen dem Ausgleichsbehälter und dem Deckel aufweist.
Dieser Balg dient zum Volumenausgleich bei sich änderndem Füllvolumen der Hydraulikflüssigkeit im Ausgleichsbehälter. Das Hydrauliksystem kann dadurch dicht nach außen geschlossen ausgebildet sein.
Der elastische Balg ist hohl und insbesondere wannenförmig mit einer umlaufenden, flanschartigen Dichtung am Öffnungsrand ausgebildet. Wie bereits vorerwähnt, bildet die Dichtung des Balgs in Montagestellung die Abdichtung zwischen dem Ausgleichsbehälter und dem Deckel, so dass gleichzeitig der Balg und der Ausgleichsbehälter oberseitig verschlossen sind.
Im Ausgleichsbehälter-Deckel ist eine Balgbelüftungsöffnung vorgesehen, so dass bei Volumenänderungen der Hydraulikflüssigkeit im Ausgleichsbehälter und entsprechender Volumenänderung des Balgs, im Innenraum des Balgs befindliche Luft entweichen oder aber von außen zuströmen kann.

Nach einer vorteilhaften Weiterbildung der Erfindung ist vorgesehen, dass die Unterseite des Balgs zumindest in Befüll- und Entlüftungsposition des Gebersystems eine schräge Leitfläche zur Entlüftungsstelle bei der Befüll- und Entlüftungsöffnung bildet.
Beim Entlüften oder Befüllen des Hydrauliksystems werden in der Hydraulikflüssigkeit enthaltene Luftbläschen beim Aufsteigen in der Hydraulikflüssigkeit entlang der dachförmig ansteigenden Leitfläche des Balgs in Richtung Entlüftung geführt, was eine vollständige Entlüftung begünstigt.
Für eine saubere (kleckerfreie) Befüllung des Hydrauliksystems mit Hydraulikflüssigkeit weist ein der Bremsanlage zugeordnetes Entlüftungs- und Befüllwerkzeug einen Anschlussstutzen oder dergleichen Anschlusselement zum dichtenden Einstecken in die Befüll- und Entlüftungsöffnung auf.
Damit kann im wesentlichen ohne weitere Hilfsmittel ein Befüllen und/oder Belüften des Hydrauliksystems vorgenommen werden. Das Entlüftungs- und Befüllwerkzeug kann dabei direkt in die Befüll- und Entlüftungsöffnung beziehungsweise deren Einsteckabschnitt eingesteckt werden und ist dann in etwa vertikaler oder etwas schräger Lage gehalten. Zusätzliche Hilfsmittel zum Halten sind nicht erforderlich. Insbesondere durch eine Konusverbindung zwischen Anschlussstutzen und Befüll- und Entlüftungsöffnung ist alleine durch das Einstecken eine dichte und sichere Verbindung vorhanden, die druck- und vakuumdicht ist und mit zu einer einfachen und sauberen Handhabbarkeit beim Befüll- und Belüftungsvorgang beiträgt.

Besonders zweckmäßig ist es, wenn der Anschlussstutzen des Entlüftungs- und Befüllwerkzeugs einen Luerkonus oder einen Luer-Lock aufweist und wenn die Befüll- und Entlüftungsöffnung beziehungsweise deren Einsteckabschnitt passend zu dem Anschlussstutzen ausgebildet ist. Sowohl der Luerkonus zum Einstecken als auch der Luer-Lock zum Eindrehen bilden bewährte, einfach zu handhabende, dichte und sichere Verbindungen.
Besonders vorteilhaft ist es, wenn das Entlüftungs- und Befüllwerkzeug eine Kolben-Zylinderanordnung aufweist. Damit ist eine besonders gute Dosierbarkeit der einzufüllenden Hydraulikflüssigkeit gegeben. Dies ist in Anbetracht der geringen Füllmenge zum Beispiel bei hydraulischen Bremsanlagen für Fahrräder von besonderer Bedeutung. Außerdem kann damit sowohl Druck als auch ein vergleichsweise hoher Unterdruck erzeugt werden, durch den außer einer spülenden auch eine saugende Befüllung des Hydrauliksystems möglich ist.

Bei Einsatz eines Luerkonus oder Luer-Lock als Konusverbindung kann in besonders vorteilhafter Weise als Entlüftungs- und Befüllwerkzeug eine handelsübliche Spritze verwendet werden, die praktisch überall erhältlich und kostengünstig ist und deren gängiges Füllvolumen von beispielsweise 10 ml oder 20 ml für eine vollständige Befüllung und/oder Entlüftung eines Hydrauliksystems insbesondere für Fahrräder ausreicht, ohne dass sie mehrfach an- und abgesetzt werden muss.

Das Entlüftungs- und Befüllwerkzeug kann auch in das Gebersystem integriert, also Teil des Gebersystems sein. Es kann dabei permanent an den Ausgleichsbehälter angeschlossen sein oder aber in einer Halterung gehalten und für den Befüll- und Entlüftungsvorgang entnehmbar oder abnehmbar und an die Befüll- und Entlüftungsöffnung dicht anschließbar sein.

Nach einer Ausführungsform der Erfindung kann die Überströmöffnung von der Anschlusskammer zum Ausgleichsbehälter anstatt in der Begrenzungswand der Anschlusskammer in einem auf der Begrenzungswand aufliegenden Gegenstück angeordnet sein. Das auf der Begrenzungswand aufliegende Gegenstück kann insbesondere der Deckel oder eine Dichtung zwischen dem Deckel und dem Ausgleichsbehälter sein.

Dies ist vor allem dann vorgesehen, wenn das Einbringen einer oder mehrerer Überströmöffnungen in die Anschlusskammer-Begrenzungswand problematisch ist.
Beispielsweise kann dies bei einem Gebergehäuse aus Metall, insbesondere aus geschmiedetem Metall der Fall sein, weil vergleichsweise filigrane Ein- und Ausformungen hierbei nur schwierig und insbesondere nicht ohne aufwendige Nacharbeiten realisierbar sind.
Die Überströmöffnung(en) von der Anschlusskammer zum Ausgleichsbehälter können in einem solchen Fall im Deckel selbst oder in einer Dichtung zwischen dem Deckel und dem Ausgleichsbehälter vorgesehen sein.
Die Überströmöffnung(en) kann dabei in ihrem die Begrenzungswand überdeckenden Bereich kanalförmig als randoffene Nut ausgebildet sein, die mit ihrer Öffnung der Begrenzungswand zugewandt ist und diese übergreift.
Bevorzugt ist vorgesehen, dass die Dichtung mit der wenigstens einen Überströmöffnung der umlaufende Seitenflansch des elastischen Balgs ist.

Zusätzliche Ausgestaltungen der Erfindung sind in den weiteren Unteransprüchen aufgeführt. Nachstehend ist die Erfindung anhand der Zeichnungen in einem Ausführungsbeispiel näher erläutert. Es zeigt:
- Fig. 1: eine Ansicht einer hydraulischen Bremsanlage mit einem Gebersystem und einer an einer Bremsscheiben angeordneten Bremsvorrichtung,
- Fig. 2: eine Schnittdarstellung des in Fig. 1 gezeigten Gebersystems,
- Fig. 3: eine Schnittdarstellung der in Fig. 1 gezeigten Bremsvorrichtung,
- Fig. 4: eine Schnittdarstellung eines Gebersystems in einer Befüll- und Entlüftungsposition mit angesetztem Entlüftungs- und Befüllwerkzeug,
- Fig. 5: eine Schnittdarstellung des Gebersystems in Betriebsposition,
- Fig. 6: eine vergrößerte Darstellung des Gebersystems gemäß Fig. 4 in Befüll- und Entlüftungsposition,
- Fig. 7: eine vergrößerte Schnittdarstellung des Gebersystems gemäß Fig. 5 in Betriebsposition,
- Fig. 8: eine Aufsicht eines Gebersystems mit offenem Ausgleichsbehälter,
- Fig. 9: eine Aufsicht eines Gebersystems mit angesetztem Entlüftungs- und Befüllwerkzeug,
- Fig. 10: eine Aufsicht eines Ausgleichsbehälter-Deckels,
- Fig. 11: eine Seitenansicht des in Fig. 10 gezeigten Deckels,
- Fig. 12: eine vergrößerte Darstellung eines Deckelbereichs mit einer Befüll- und Entlüftungsöffnung,
- Fig. 13: eine perspektivische Ansicht eines Balgs,
- Fig. 14: eine Schnittdarstellung des Gebersystems mit Überströmöffnungen im umlaufenden Seitenflansch eines elastischen Balgs,
- Fig. 15: eine Schmalseitenansicht eines Balgs mit Überströmöffnungen und
- Fig. 16: eine Unterseitenansicht des in Fig.15 gezeigten Balgs.

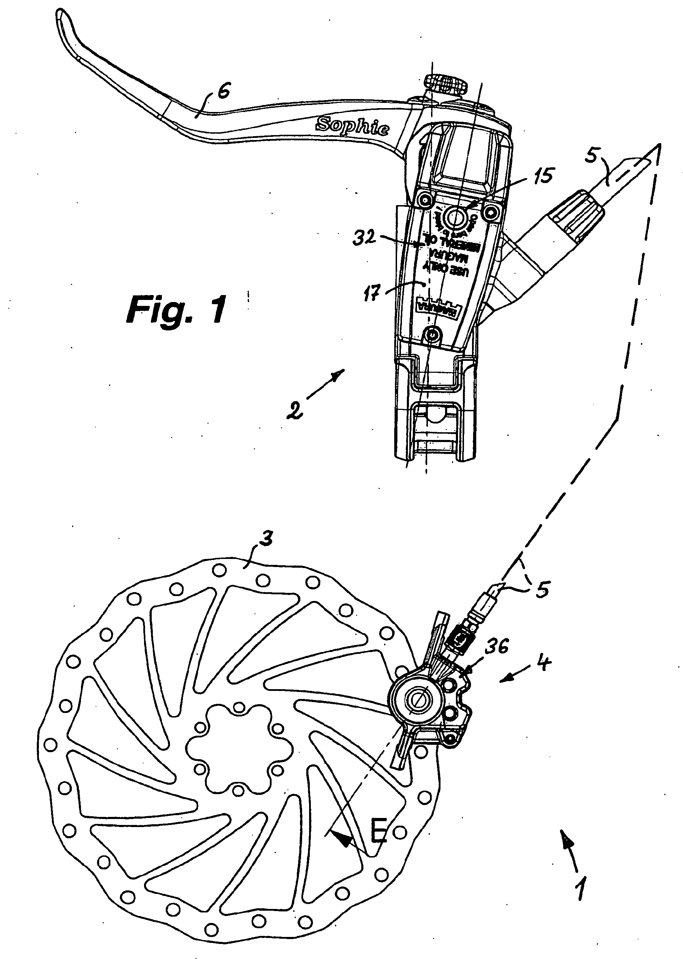

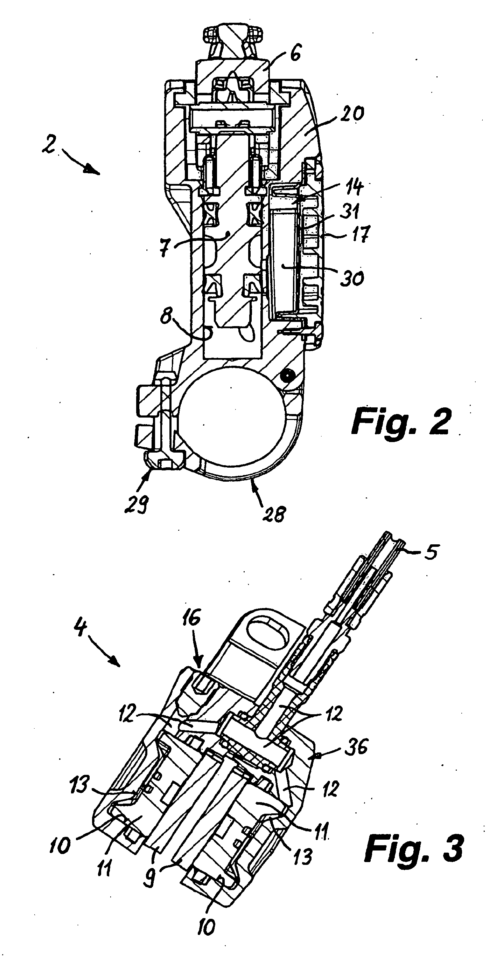

Eine in Fig. 1 gezeigte, hydraulische Bremsanlage 1 ist insbesondere für Fahrräder, gegebenenfalls aber auch für andere Zweiräder einsetzbar. Sie weist ein Gebersystem 2 sowie eine an einer Bremsscheibe 3 angesetzte Bremsvorrichtung 4 auf. Die Bremsanlage ist mit Hydraulikflüssigkeit gefüllt, wobei das Gebersystem 2 über eine strichliniert angedeutete Hydraulikleitung 5 mit der Bremsvorrichtung 4 verbunden ist.
Das Gebersystem 2 weist einen handbetätigbaren Bremshebel 6 auf, mit dem ein in einem Zylinder 8 geführter Geberkolben 7 (vgl. Fig. 2) bewegt werden kann und dabei Hydraulikflüssigkeit über die Hydraulikleitung 5 zu der Bremsvorrichtung 4 fördert. Diese Bremsvorrichtung 4 weist eine Bremszange 36 auf, die an der mit dem zu bremsenden Rad verbundenen Bremsscheibe 3 angeordnet ist. Die Bremsscheibe 3 wird beim Bremsen beidseitig mit zwei Bremsbelägen 9 beaufschlagt (Fig. 3). Dazu sind in Bremszylindern 10 geführte Bremskolben 11 vorgesehen, die rückseitig mit Hydraulikflüssigkeit beaufschlagbar sind. Die Hydraulikflüssigkeit wird dabei von der Hydraulikleitung 5 über Kanäle 12 zu hinter den Bremskolben 11 befindlichen Druckkammern 13 geführt.

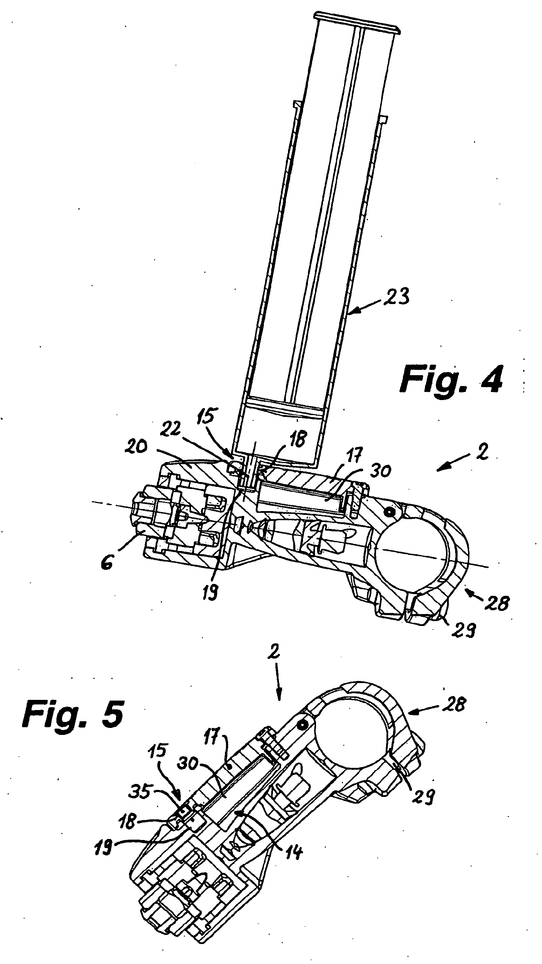

Das Gebersystem 2 weist einen Ausgleichsbehälter 14 für Hydraulikflüssigkeit auf, der bei unbetätigtem Bremshebel 6 mit dem Zylinder 8 und damit dem Hydraulikkreislauf verbunden ist.
Um das Hydrauliksystem befüllen und entlüften zu können, weist das Gebersystem 2 eine Befüll- und Entlüftungsöffnung 15 und die Bremsvorrichtung 4 ebenfalls eine Befüll- und Entlüftungsöffnung 16 (Fig. 3) auf.
Im gezeigten Ausführungsbeispiel ist die Befüll- und Entlüftungsöffnung 15 des Gebersystems 2 oberseitig an diesem vorgesehen und durchsetzt einen den Ausgleichsbehälter 14 oberseitig verschließenden Deckel 17 (Fig. 4 bis 7), der durch Verschraubungen mit dem Gebergehäuse 20 verbunden ist.

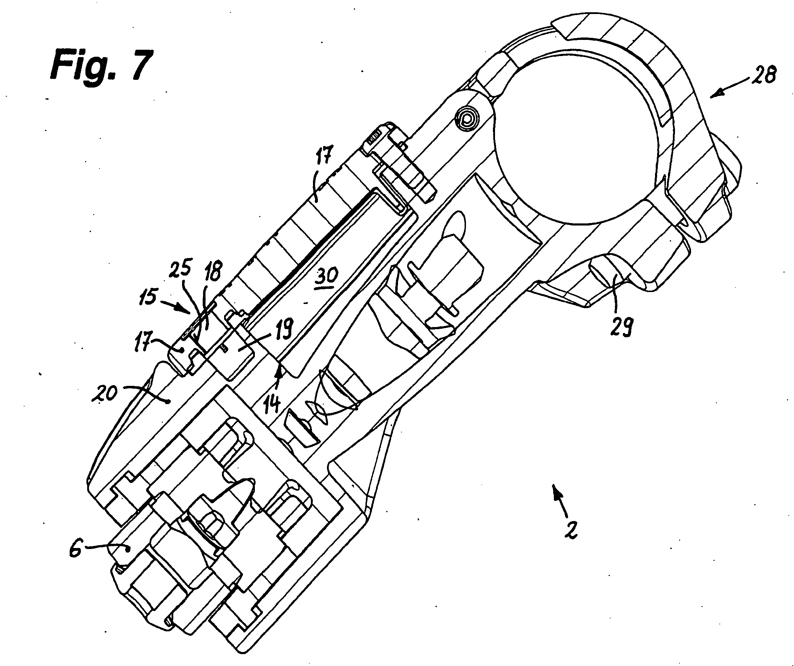

Insbesondere in Fig. 7 ist gut erkennbar, dass die Befüll- und Entlüftungsöffnung 15 im Deckel 17 einen Einsteckabschnitt 18 aufweist, an den sich vorzugsweise fluchtend in axialer Verlängerung eine Anschlusskammer 19 im Gebergehäuse 20 anschließt. Die Anschlusskammer 19 ist topf- oder napfförmig ausgebildet und weist an ihrem Oberrand schlitzförmige, randoffene Überströmöffnungen 21 zu dem Ausgleichsbehälter 14 auf. Dadurch besteht eine Strömungsverbindung zwischen dieser Anschlusskammer 19 und dem Ausgleichsbehälter 14.

Die Ausbildung der einen Zuführkanal zum Ausgleichsbehälter 14 bildenden Befüll- und Entlüftungsöffnung 15 einerseits aufgeteilt in zwei vorzugsweise axial fluchtende Abschnitte - Einsteckabschnitt 18, Anschlusskammer 19- und andererseits angeordnet in zwei getrennt herstellbaren Teilen -Deckel 17, Gebergehäuse 17- hat fertigungstechnisch erhebliche Vorteile, weil es sich um Einzelbohrungen handelt, die durch Formstifte einfach herstellbar sind. Bei dem Zuführkanal der Befüll- und Entlüftungsöffnung 15 handelt es sich in Funktionslage um eine Stufenbohrung mit einer innenliegenden, im Durchmesser größeren Stufe, was bei einer einteiligen Ausführung formungstechnisch wegen des Hinterschnitts einen erhöhten Aufwand bedeuten würde.
Der Einsteckabschnitt 18 im Deckel 17 und die Anschlusskammer 19 im Gebergehäuse 20 sind bezüglich ihrer Längsachsen so ausgerichtet, dass sie jeweils in Entformungsrichtung des Deckels beziehungsweise des Gebergehäuses verlaufen und damit ein problemloses Entformen ermöglichen. Durch die randoffene Ausbildung der vorzugsweise schlitzförmigen Überströmöffnungen 21, die ebenfalls in Entformungsrichtung orientiert sind, sind diese ebenfalls einfach herstellbar.

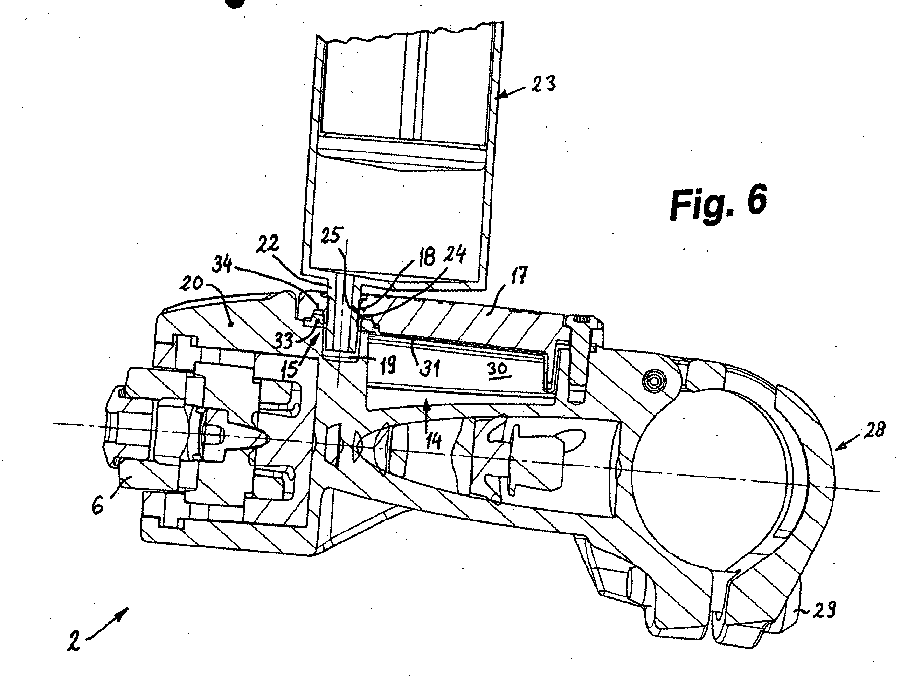

Der Einsteckabschnitt 18 der Befüll- und Entlüftungsöffnung 15 ist zur dichten Aufnahme eines Anschlussstutzens 22 eines Entlüftungs- und Befüllwerkzeugs 23 ausgebildet und weist dazu einen Aufnahmekonus 25 auf. Der Aufnahmekonus 25 ist vorzugsweise zur Einsteck-Aufnahme eines als Luerkonus 24 ausgebildeten Anschlussstutzens 22 des Entlüftungs- und Befüllwerkzeugs 23 ausgebildet (Fig. 6). Dadurch besteht die Möglichkeit, als Entlüftungs- und Befüllwerkzeug 23 eine handelsübliche Spritze, wie in Fig. 4, 6 und 9 erkennbar, zu verwenden.
Die Einsteckverbindung mit dem Aufnahmekonus 25 und dem Anschlussstutzen 22 ist so dimensioniert, dass der Anschlussstutzen 22 in Einstecklage bereichsweise in die Anschlusskammer 19 ragt, wobei er mit seinem inneren Ende noch etwas Abstand zum Grund der Anschlusskammer 19 hat, wie dies gut in Fig. 6 erkennbar ist. In dieser Einstecklage ist der Anschlussstutzen 22 des Entlüftungs- und Befüllwerkzeugs 23 sicher in dem Deckel 17 gehalten, so dass auch beim Manipulieren während eines Entlüftungs- oder Befüllvorganges ein unbeabsichtigtes Herausrutschen sicher vermieden wird. Die Anschlusskammer 19 hat lichte Abmessungen, die größer als die des hineinragenden Teils des Anschlussstutzens 22 sind, so dass noch Platz für ein Überströmen von Hydraulikflüssigkeit durch die Überströmöffnungen 21 vorhanden ist.

In dem Ausführungsbeispiel ist die Befüll- und Entlüftungsöffnung 15 seitlich neben dem Ausgleichsbehälter 14 angeordnet und befindet sich in Befüll- und Entlüftungsposition gemäß Fig. 6 auf der höchsten Seite neben dem Ausgleichsbehälter 14. Der Deckel 17 ist dabei so ausgebildet, dass er auch diesen, seitlich neben dem Ausgleichsbehälter 14 befindlichen Bereich des Gebergehäuses 20 übergreift.

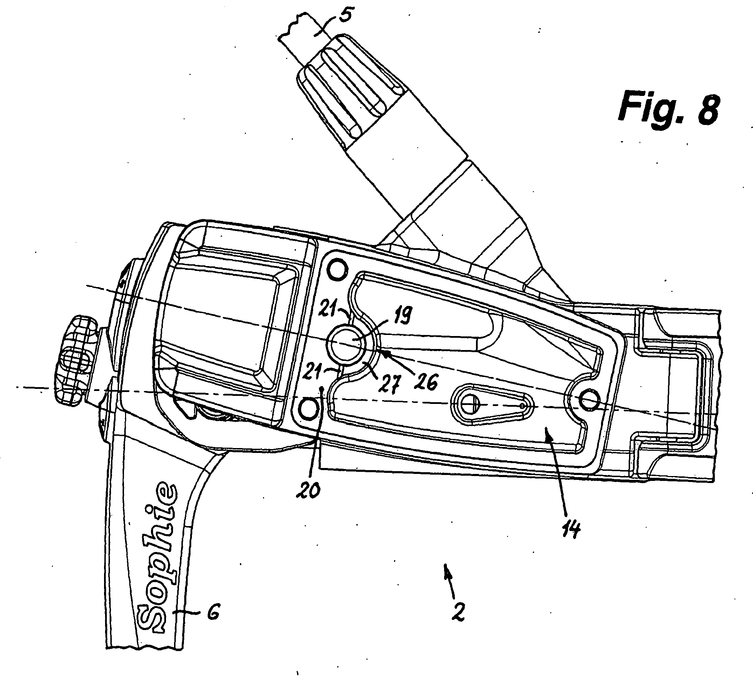

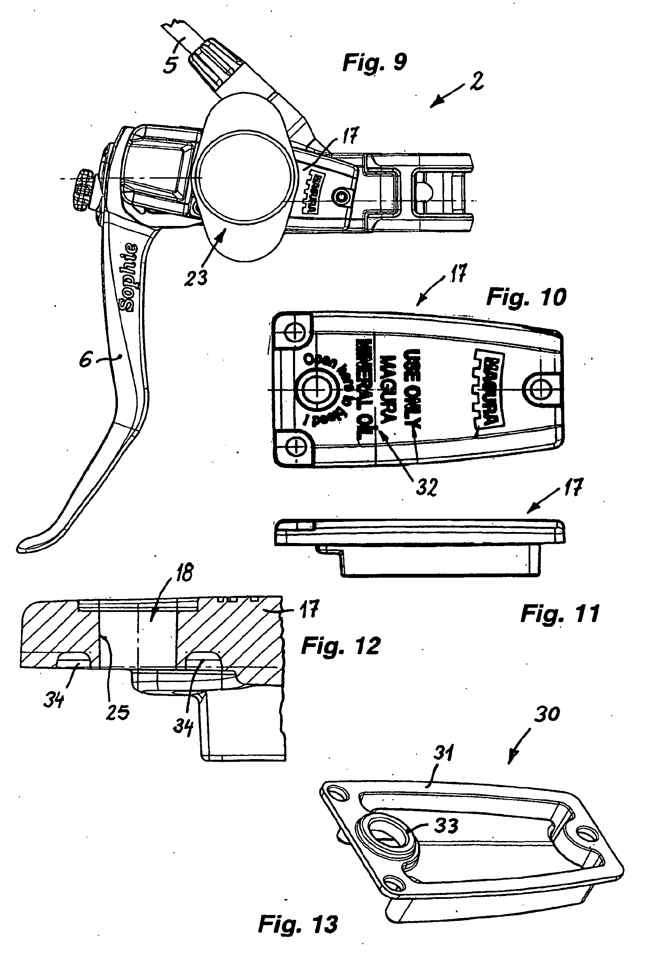

In Fig. 8 ist gut bei oben offenem Ausgleichsbehälter 14, also ohne Deckel 17 und entferntem Balg 30 (Fig. 13) erkennbar, dass die Anschlusskammer 19 der Befüll- und Entlüftungsöffnung 15 in einer seitlich in den Ausgleichsbehälter 14 ragenden Ausbuchtung 26 des Gebergehäuses 20 angeordnet ist. Die Anschlusskammer 19 ist dabei von einer Umgrenzungswand 27 umgeben, in der sich die zwei schlitzförmigen, nach oben randoffenen Überströmöffnungen 21 befinden. Die beiden Überströmöffnungen 21 sind dabei seitlich versetzt zu dem vordersten, dem Ausgleichsbehälter 14 zugewandten Bereich der Ausbuchtung 26 angeordnet. Dadurch wird erreicht, dass nach einem Befüll- oder Entlüftungsvorgang gegebenenfalls noch in der Anschlusskammer 19 befindliche Luftbläschen in der in Fig. 7 gezeigten, schrägen Betriebsposition des Gebersystems 2 nicht über' die Überströmöffnungen 21 in den Ausgleichsbehälter 14 gelangen können sondern im etwas höher liegenden Teil der Anschlusskammer 19 gefangen bleiben. Dazu trägt auch bei, dass die Überströmöffnungen 21 als schmale Randschlitze ausgebildet sind, wobei die Schlitzbreite zum Zurückhalten von in der Hydraulikflüssigkeit enthaltenen Luftblasen dimensioniert ist.

In dem Ausgleichsbehälter 14 ist ein elastischer Balg 30 eingesetzt, der, wie in Fig. 13 erkennbar, wannenförmig ausgebildet ist und an seinem Öffnungsrand eine umlaufende, als Flansch ausgebildeten Dichtung 31 aufweist. Dieser Balg 31 wird in den Ausgleichsbehälter 14 eingesetzt und füllt diesen bereichsweise aus. Die Dichtung 31 liegt auf dem Randbereich des Ausgleichsbehälters und damit auf dem Gebergehäuse 20 auf. Durch den aufgesetzten Deckel 17 erfolgt dann ein Verschließen und Abdichten sowohl des Balgs 30 als auch des Ausgleichsbehälters 14 nach außen. Der Hohlraum des Balgs 30 ist über eine Balgbelüftungsöffnung 32 (Fig. 1 und 10) durch den Deckel 17 hindurch mit der Außenatmosphäre verbunden.
Die zwischen dem Ausgleichsbehälter 14 und dem ihn oberseitig abdichtenden Deckel 17 umlaufende Dichtung 31, die durch den Seitenflansch des Balgs 30 gebildet ist, erstreckt sich auch in den Seitenbereich neben den Ausgleichsbehälter 14 und dabei zwischen den Einsteckabschnitt 18 und die Anschlusskammer 19 der Befüll- und Entlüftungsöffnung 15.
In diesem Bereich ist die Dichtung 31 mit einer Ringswulst 33 versehen, wie dies gut in Fig. 6 und 13 erkennbar ist.
In etwa komplementär zu dieser Ringwulst 33 weist der den Einsteckabschnitt 18 umgebende Deckelbereich eine Ringnut 34 zur dichtenden Aufnahme dieser Ringwulst 33 auf (Fig. 12). Die Ringwulst 33 liegt mit ihrer Unterseite auf dem Oberrand der Anschlusskammer 19 beziehungsweise deren Begrenzungswand 27 auf (Fig. 6). Die in der Begrenzungswand 27 befindlichen, randoffenen Überströmöffnungen 21 werden von der Ringwulst 33 überbrückt, wobei die erhöhte Eigenstabilität der Ringwulst 33 im Vergleich zu der flachen Ausführung der Dichtung im benachbarten Bereich auch im Überbrückungsbereich für eine gute Dichtigkeit sorgt.

Bei abgenommenem Entlüftungs- und Befüllwerkzeug 23 kann die Befüll- und Entlüftungsöffnung 15 mit einem elastischen, vorzugsweise mit einem Konus versehenen Verschlussstopfen 35 (Fig. 5) verschlossen werden.

Die Befüll- und Entlüftungsöffnung 15 weist vorzugsweise einen Einsteckabschnitt 18 mit einem Aufnahmekonus 25 auf, in den der mit einem dazu passenden Außenkonus versehene Verschlussstopfen 35 einsteckbar ist. Die Abdichtung erfolgt hierbei durch die Konusverbindung.

Der Verschlussstopfen 35 kann eine von außen zugängliche Einsteckhöhlung als Werkzeugangriffsstelle für ein Drehwerkzeug aufweisen, die bevorzugt als Innensechskant für einen Sechskantschlüssel als Drehwerkzeug ausgebildet ist.
Der Verschlussstopfen 35 kann dadurch nach dem Einsetzen des Drehwerkzeugs mit diesem etwas verdreht und dabei, unterstützt durch die Konusverbindung, herausgezogen werden.
Durch die innen liegende Werkzeugangriffsstelle kann der eingesteckte Verschlussstopfen etwa bündig mit der Außenseite des Deckels oder der Öffnung des Einsteckabschnitts 18 im Deckel 17 abschließen oder sogar etwas tiefer liegen, so dass ein unbeabsichtigtes Lösen oder Entfernen des Verschlussstopfens praktisch ausgeschlossen ist.

Der Verschlussstopfen kann aus Hartkunststoffmaterial bestehen, beispielsweise aus dem gleichen Werkstoff wie der Deckel 17. Auch andere Materialien kommen in Frage, wobei nur sicher gestellt sein muss, dass das Moment zum Verdrehen des Verschlussstopfens 35 vom Drehwerkzeug übertragen werden kann.

Erwähnt sei noch, dass anstatt eines Verschlussstopfens 35 auch eine Dichtschraube vorgesehen sein kann, die in eine Gewindebohrung der Befüll- und Entlüftungsöffnung 15 einschraubbar ist, wobei die Abdichtung über die Stirnfläche erreicht wird.

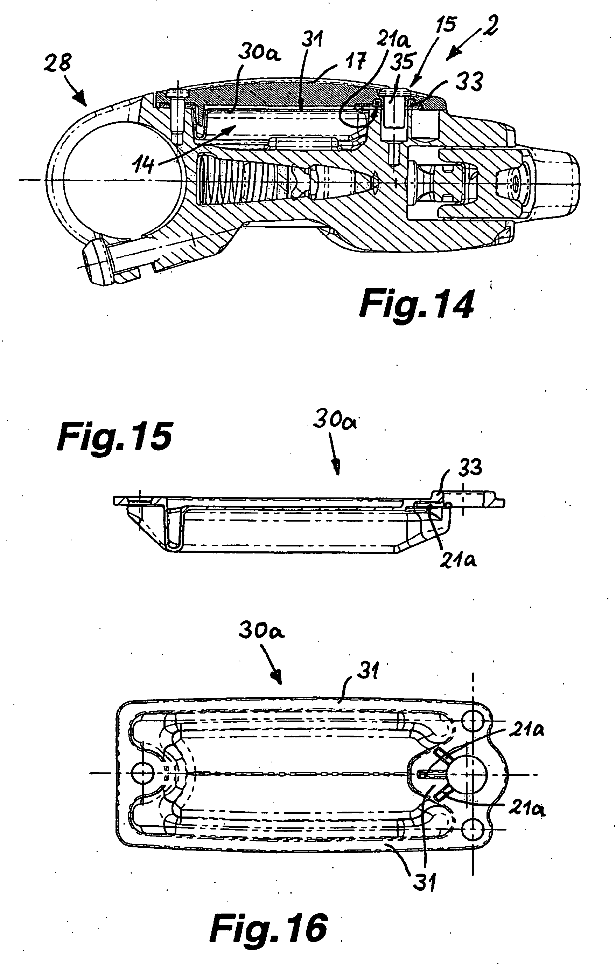

Bei dem in Fig. 14 im Schnitt dargestellten Gebersystem 2 sind Überströmöffnungen 21a von der Anschlusskammer zum Ausgleichsbehälter anstatt, wie vorbeschrieben, in der Begrenzungswand 27 der Anschlusskammer 19, in einem auf der Begrenzungswand aufliegenden Gegenstück angeordnet, welches im Ausführungsbeispiel die Dichtung 31 zwischen dem Deckel und dem Ausgleichsbehälter als Teil des Balgs 30a ist. Die Dichtung 31 ist dabei durch den umlaufenden Seitenflansch des elastischen Balgs 30a (Fig.15 und 16) gebildet.
Dieser Dichtungs- oder Seitenflansch erstreckt sich über den Bereich der Anschlusskammer 19 und deren Begrenzungswand 27, wobei die im Ausführungsbeispiel drei kanalförmigen Überströmöffnungen 21a (Fig.16) im Balg-Seitenflansch und damit der Dichtung 31 angeordnet sind und die Begrenzungswand 27 überdecken, also mit ihren Enden einerseits in den Ausgleichsbehälter 14 und andererseits in die Anschlusskammer 19 ragen. Durch diese Überströmöffnungen oder Überströmkanäle ist eine Strömungsverbindung zwischen der Anschlusskammer 19 und dem Ausgleichsbehälter 14 vorhanden.
Die Überströmöffnungen 21a sind als randoffene Nuten ausgebildet, die mit ihren Öffnungen der Begrenzungswand 27 zugewandt sind.
Die Dichtung 31 ist im Auflagebereich auf der Begrenzungswand 27 der Anschlusskammer 19 aufgedickt (Fig.15), so dass einerseits in diesem Bereich eine erhöhte Eigenstabilität vorhanden ist und andererseits die Platzverhältnisse für im Querschnitt ausreichend dimensionierte Überströmöffnungen 21a vorhanden sind.

Erwähnt sei noch, dass die wenigstens eine Überströmöffnung 21 von der Anschlusskammer 19 zum Ausgleichsbehälter 14 auch direkt im Deckel 17 vorgesehen sein kann, wenn dieser aus geeignetem Material besteht, um eine Abdichtung zur Anschlusskammer 19 zu erreichen. Auch hierbei sind die Überströmöffnungen an der entsprechenden Stelle wie bei der Dichtung 31 angeordnet. Weiterhin könnte die wenigstens eine Überströmöffnung auch als Bohrung in der Seitenwand der Anschlusskammer 19 ausgeführt sein. Bei formgebenden Verfahren wie zum Beispiel Spritzgießen sind jedoch randoffene Überströmöffnungen spritztechnisch einfacher realisierbar.

Das Gebersystem 2 ist mittels einer Halterung 28 mit dem Lenker eines Zweirads verbindbar. Die Halterung 28 ist schellenartig ausgebildet und kann mit Hilfe einer Spannschraube 29 angezogen oder gelockert werden. Dadurch lässt sich das Gebersystem leicht in die passende Position einerseits für den Betrieb (Fig. 5 und 7) und dementsprechend passend für eine gute Bedienbarkeit und andererseits für den Befüll- und Entlüftungsvorgang (Fig. 4 und 6) entsprechend verstellen.
Erwähnt sei noch, dass für den Befüll- und insbesondere den Entlüftungsvorgang das Gebersystem 2 von einer Lage mit nahezu vertikalem Entlüftungs- und Befüllwerkzeug 23 wie in Fig. 4 und 6 dargestellt, bis zu einer etwa waagerechten Lage des Entlüftungs- und Befüllwerkzeugs 23 gut möglich ist.

Zum Befüllen des Hydrauliksystems kann die das Entlüftungs- und Befüllwerkzeug 23 bildende Spritze gemäß Fig. 4, 6 und 9 oberseitig auf das Gebersystem 2 aufgesteckt und dabei mit ihrem Anschlussstutzen 22 dicht in den Aufnahmekonus 25 der Befüll- und Entlüftungsöffnung 15 eingesetzt werden. Durch die vorgesehene Konusverbindung ergibt sich schon bei leichtem Eindrücken eine sichere und dichte Verbindung. Bei der Bremsvorrichtung 4 kann an die Befüll- und Entlüftungsöffnung 16 ein Behälter mit Hydraulikflüssigkeit angeschlossen werden, wobei dieser Behälter auch eine mit Hydraulikflüssigkeit gefüllte Spritze sein kann.

Vorzugsweise ist die Befüll- und Entlüftungsöffnung 16 der Bremsvorrichtung 4 ebenfalls mit einem Luer-Aufnahmekonus versehen, so dass auch hier handelsübliche Spritzen als Entlüftungs- und Befüllwerkzeug 23 angesetzt werden können.
Mit der oben bei dem Gebersystem 2 angesetzten Spritze wird die Hydraulikflüssigkeit angesaugt und strömt dann von unten in das Hydrauliksystem. Die untere, mit Hydraulikflüssigkeit gefüllte Spritze kann ,dabei unterstützend betätigt werden, so dass der Befüllvorgang schnell abgeschlossen werden kann.

## Patentansprüche

1. Bremssystem mit einer hydraulischen Bremsanlage (1) für Zweiräder, insbesondere Fahrräder, wobei die Bremsanlage ein mit Hydraulikflüssigkeit gefülltes Gebersystem (2) und eine hydraulisch damit verbundene Bremsvorrichtung (4) aufweist, wobei das Gebersystem einen Ausgleichsbehälter (14) und eine Befüll- und Entlüftungsöffnung (15) aufweist, die einen in einem Deckel (17) des Ausgleichsbehälters (14) angeordneten Einsteckabschnitt (18) zur dichten Aufnahme eines Entlüftungs- und Befüllwerkzeugs (23) aufweist, **dadurch gekennzeichnet, dass** an den Einsteckabschnitt (18) sich in Einsteckrichtung eine Anschlusskammer (19) im Gebergehäuse (20) anschließt, die eine seitliche Begrenzungswand (27) zum Ausgleichsbehälter (14) hat und dass in der Begrenzungswand (27) oder in einem auf der Begrenzungswand aufliegenden Gegenstück wenigstens eine randoffene Überströmöffnung (21) zum Ausgleichsbehälter (14) vorgesehen ist.

2. Bremssystem nach Anspruch 1, **dadurch gekennzeichnet, dass** der Einsteckabschnitt (18) der Befüll- und Entlüftungsöffnung (15) zur dichten Aufnahme eines Anschlussstutzens (22) des Entlüftungs- und Befüllwerkzeugs ausgebildet ist, dass der Anschlussstutzen (22) in Anschlusslage in die insbesondere napfförmig ausgebildete Anschlusskammer (19) ragt und dass die Anschlusskammer (19) lichte Innenabmessungen hat, die größer sind als das hineinragende Teil des Anschlussstutzens (22).

3. Bremssystem nach Anspruch 1 oder 2, **dadurch gekennzeichnet, dass** die randoffene Überströmöffnung (21) in der Begrenzungswand (27) der Anschlusskammer (19) in Betriebsposition des Gebersystems (2) in einem der höchsten Stelle der seitlichen Begrenzungswand (27) beabstandeten Bereich angeordnet ist.

4. Bremssystem nach einem der Ansprüche 1 bis 3, **dadurch gekennzeichnet, dass** zwei vorzugsweise etwa gegenüberliegend angeordnete, randoffene Überströmöffnungen (21) in der Begrenzungswand (27) vorgesehen sind.

5. Bremssystem nach einem der Ansprüche 1 bis 4, **dadurch gekennzeichnet, dass** die in der Begrenzungswand (27) der Anschlusskammer (19) angeordnete(n) Überströmöffnung(en) (21) als schmaler Randschlitz ausgebildet ist (sind) und dass die Schlitzbreite zum Zurückhalten von in der Hydraulikflüssigkeit enthaltenen Luftblasen dimensioniert ist.

6. Bremssystem nach einem der Ansprüche 1 bis 5, **dadurch gekennzeichnet, dass** der den Ausgleichsbehälter (14) überdeckende und randseitig auf dem Gehäuse (20) abdichtend aufliegende Deckel (17) seitlich neben dem Ausgleichsbehälter (14) den Einsteckabschnitt (18) für das Entlüftungs- und Befüllwerkzeug aufweist und dass sich die in Einsteckrichtung anschließende, napfförmige Anschlusskammer (19) im Gebergehäuse (20) befindet.

7. Bremssystem nach einem der Ansprüche 1 bis 6, **dadurch gekennzeichnet, dass** die Anschlusskammer (19) der Befüll- und Entlüftungsöffnung (15) in einer in den Ausgleichsbehälter (14) ragenden Ausbuchtung (26) des Gebergehäuses (20) angeordnet ist.

8. Bremssystem nach einem der Ansprüche 1 bis 7, **dadurch gekennzeichnet, dass** in Befüll- und Entlüftungsposition des Gebersystems (2) die Befüll- und Entlüftungsöffnung (15) auf der höchsten Seite neben dem Ausgleichsbehälter (14) angeordnet ist.

9. Bremssystem nach einem der Ansprüche 1 bis 8, **dadurch gekennzeichnet, dass** die Befüll- und Entlüftungsöffnung (15) in dem den Ausgleichsbehälter (14) überdeckenden Bereich des Deckels (17) angeordnet ist, dass der Einsteckabschnitt (18) den Deckel (17) durchsetzt und dass sich die in Einsteckrichtung dicht anschließende Anschlusskammer (19) im Gebergehäuse (20) in einem innerhalb des Ausgleichsbehälters (14) befindlichen Gehäusevorsprung befindet.

10. Bremssystem nach einem der Ansprüche 1 bis 9, **dadurch gekennzeichnet, dass** zwischen dem Ausgleichsbehälter (14) und dem ihn oberseitig abdichtenden Deckel (17) eine Dichtung (31) vorgesehen ist, die sich in den Bereich zwischen dem Einsteckabschnitt (18) und der sich anschließenden Anschlusskammer (19) der Befüll- und Entlüftungsöffnung (15) erstreckt.

11. Bremssystem nach Anspruch 10, **dadurch gekennzeichnet, dass** die Dichtung (31) zumindest im Auflagebereich-auf der Begrenzungswand (27) der Anschlusskammer (19) aufgedickt ist und dass der ihr zugewandte, den Einsteckabschnitt (18) umgebende Deckelbereich eine Ringnut (34) zur dichtenden Aufnahme der Dichtung beziehungsweise des aufgedickten Dichtungsbereichs hat.

12. Bremssystem nach einem der Ansprüche 1 bis 11, **dadurch gekennzeichnet, dass** in dem Ausgleichsbehälter (14) ein elastischer Balg (30) eingesetzt ist, der vorzugsweise durch einen gummielastischen Formkörper gebildet ist und zumindest einen umlaufenden Seitenflansch als Dichtung (31) zwischen dem Ausgleichsbehälter (14) und dem Deckel (17) aufweist.

13. Bremssystem nach Anspruch 12, **dadurch gekennzeichnet, dass** der elastische Balg (30) hohl, insbesondere wannenförmig mit einer umlaufenden Dichtung (31) am Öffnungsrand ausgebildet und dass eine Balgbelüftungsöffnung (32) vorgesehen ist, die vorzugsweise den Ausgleichsbehälter-Deckel (17) durchsetzt.

14. Bremssystem nach Anspruch 12 oder 13, **dadurch gekennzeichnet, dass** die Unterseite des Balgs (30) zumindest in Befüll- und Entlüftungsposition des Gebersystems (2) eine schräge Leitfläche zur Entlüftungsstelle bei der Befüll- und Entlüftungsöffnung (15) bildet.

15. Bremssystem nach einem der Ansprüche 1 bis 14, **dadurch gekennzeichnet, dass** ein insbesondere elastischer-Verschlussstopfen (35) vorzugsweise mit einem Konus oder eine Dichtschraube zum Verschließen der Befüll- und Entlüftungsöffnung (15) vorgesehen ist.

16. Bremssystem nach einem der Ansprüche 1 bis 15, **dadurch gekennzeichnet, dass** ein Entlüftungs- und Befüllwerkzeug (23) einen Anschlussstutzen (22) oder dergleichen Anschlusselement zum dichtenden Einstecken in die Befüll- und Entlüftungsöffnung (15,16) hat.

17. Bremssystem nach Anspruch 16, **dadurch gekennzeichnet, dass** der Anschlussstutzen (22) des Entlüftungs- und Befüllwerkzeugs (23) einen Luerkonus (24) oder einen Luer-Lock aufweist und dass die Befüll- und Entlüftungsöffnung (15) beziehungsweise deren Einsteckabschnitt (18) passend zu dem Anschlussstutzen (22) ausgebildet ist.

18. Bremssystem nach Anspruch 16 oder 17, **dadurch gekennzeichnet, dass** das Entlüftungs- und Befüllwerkzeug (23) eine Kolben-Zylinderanordnung aufweist.

19. Bremssystem nach einem der Ansprüche 16 bis 18, **dadurch gekennzeichnet, dass** das Entlüftungs- und Befüllwerkzeug (23) eine handelsübliche Spritze ist.

20. Bremssystem nach einem der Ansprüche 16 bis 19, **dadurch gekennzeichnet, dass** das Entlüftungs- und Befüllwerkzeug (23) in das Gebersystem (2) integriert ist.

21. Bremssystem nach einem der Ansprüche 1 bis 20, **dadurch gekennzeichnet, dass** die Bremsvorrichtung (4) eine Befüll- und Entlüftungsöffnung (16) aufweist, die zum lösbaren Anschließen des Entlüftungs- und Befüllwerkzeugs (23) und vorzugsweise zum dichtenden Einstecken ausgebildet ist.

22. Bremssystem nach einem der Ansprüche 1 bis 21, **dadurch gekennzeichnet, dass** die Befüll- und Entlüftungsöffnung (15) einen Einsteckabschnitt (18) mit einem Aufnahmekonus (25) aufweist und dass der Verschlussstopfen (35) einen dazu passenden Außenkonus sowie eine von außen zugängliche Einsteckhöhlung als Werkzeugangriffsstelle für ein Drehwerkzeug hat.

23. Bremssystem nach Anspruch 22, **dadurch gekennzeichnet, dass** die Einsteckhöhlung des Verschlussstopfens (35) als Innensechskant für einen Sechskantschlüssel als Drehwerkzeug ausgebildet ist.

24. Bremssystem nach Anspruch 22 oder 23, **dadurch gekennzeichnet, dass** der in die Befüll- und Entlüftungsöffnung (15) eingesteckte Verschlussstopfen (35) etwa bündig mit der Öffnung des Einsteckabschnitts (18) oder des Deckels abschließt.

25. Bremssystem nach einem der Ansprüche 22 bis 24, **dadurch gekennzeichnet, dass** der Verschlussstopfen (35) aus Hartkunststoffmaterial besteht.

26. Bremssystem nach einem der Ansprüche 22 bis 25, **dadurch gekennzeichnet, dass** der Außenkonus des Verschlussstopfens (35) einem Luerkonus entspricht.

27. Bremssystem nach einem der Ansprüche 1 bis 26, **dadurch gekennzeichnet, dass** das Gebersystem (2) mittels einer Halterung (28) mit einem Teil des Zweirads, vorzugsweise dem Lenker verbunden ist, die zum Verstellen des Gebersystems zumindest in eine Befüll- und Entlüftungsposition (15) und eine Betriebsposition ausgebildet ist.

28. Bremssystem nach Anspruch 1, **dadurch gekennzeichnet, dass** die wenigstens eine Überströmöffnung (21) von der Anschlusskammer (19) zum Ausgleichsbehälter (14) im Deckel (17) vorgesehen ist.

29. Bremssystem nach Anspruch 1, **dadurch gekennzeichnet, dass** die wenigstens eine Überströmöffnung (21a) von der Anschlusskammer (19) zum Ausgleichsbehälter (14) in einer Dichtung (31) zwischen dem Deckel (17) und dem Ausgleichsbehälter (14) vorgesehen ist.

30. Bremssystem nach Anspruch 29, **dadurch gekennzeichnet, dass** die in der Dichtung (31) vorgesehene(n) Überströmöffnung(en) (21a) als in ihrem die Begrenzungswand (27) überdeckenden Bereich randoffene Nut ausgebildet ist, die mit ihrer Öffnung der Begrenzungswand zugewandt ist.

31. Bremssystem nach Anspruch 29 oder 30, **dadurch gekennzeichnet, dass** die Dichtung (31) zumindest im Auflagebereich auf der Begrenzungswand (27) der Arischlusskammer (19) aufgedickt ist und dort die wenigstens eine randoffene, insbesondere nutförmige Überströmöffnung (21a) aufweist.

32. Bremssystem nach einem der Ansprüche 29 bis 31, **dadurch gekennzeichnet, dass** die Dichtung (31) mit der wenigstens einen Überströmöffnung (21a), der umlaufende Seitenflansch des elastischen Balgs (30a) ist.

## Claims

1. Braking system having a hydraulic brake arrangement (1) for two-wheeled vehicles, particularly bicycles, wherein the brake arrangement comprises a transmitter system (2) filled with hydraulic fluid and a braking device (4) hydraulically connected thereto, wherein the transmitter system comprises a compensating container (14) and a fulling and venting opening (15) which has a push-in member (18) arranged in a lid (17) of the compensating container (14) for tightly accommodating a venting and filling tool (23), **characterised in that** adjoining the push-in member (18) in the direction of insertion is a connection chamber (19) in the transmitter housing (20) which has a lateral boundary wall (27) with the compensating container (14) and **in that** in the boundary wall (27) or in a mating part abutting on the boundary wall is at least one open-edged overflow opening (21) leading into the compensating container (14).

2. Braking system according to claim 1, **characterised in that** push-in member (18) of the filling and venting opening (15) is designed to tightly accommodate a connecting member (22) of the venting and filling tool, **in that** the connecting member (22) in the connected position projects into the connecting chamber (19) which is in particular cup-shaped in design, and **in that** the connecting chamber (19) has internal dimensions that are greater than the inwardly projecting part of the connecting member (22).

3. Braking system according to claim 1 or 2, **characterised in that** the open-edged overflow opening (21) which is provided in the boundary wall (27) of the connecting chamber (19) is arranged, in the operating position of the transmitter system (2), in a region that is spaced from the highest point of the lateral boundary wall (27).

4. Braking system according to one of claims 1 to 3, **characterised in that** two open-edged overflow openings (21) and preferably arranged substantially opposite one another are provided in the boundary wall (27).

5. Braking system according to one of claims 1 to 4, **characterised in that** the overflow opening(s) (21) arranged in the boundary wall (27) of the connecting chamber (19) is (are) constructed as narrow edge slots and **in that** the width of the slot is of such dimensions as to hold back any air bubbles contained in the hydraulic fluid.

6. Braking system according to one of claims 1 to 5, **characterised in that** the lid (17) covering the compensating container (14) and resting on the housing (20) at its edges so as to form a seal comprises, laterally adjacent to the compensating container (14), the push-in member (18) for the venting and filling tool, and the cup-shaped connecting chamber (19) that is adjacent in the direction of insertion is located in the transmitter housing (20).

7. Braking system according to one of claims 1 to 6, **characterised in that** the connecting chamber (19) of the filling and venting opening (15) is arranged in a bulge (26) in the transmitter housing (20) that projects into the compensating container (14).

8. Braking system according to one of claims 1 to 7, **characterised in that** in the filling and venting position of the transmitter system (2) the filling and venting opening (15) is arranged on the highest side adjacent to the compensating container (14).

9. Braking system according to one of claims 1 to 8, **characterised in that** the filling and venting opening (15) is arranged in the region of the lid (17) that extends over the compensating container (14), **in that** the push-in member (18) passes through the lid (17) and **in that** the connecting chamber (19) that is immediately adjacent in the direction of insertion is located in the transmitter housing (20) in a housing projection that is located within the compensating container (14).

10. Braking system according to one of claims 1 to 9, **characterised in that** between the compensating container (14) and the lid (17) that seals it off at the top is a gasket (31) that extends into the region between the push-in member (18) and the adjoining connecting chamber (19) of the filling and venting opening (15).

11. Braking system according to claim 10, **characterised in that** the gasket (31) is thicker at least in the area of contact with the boundary wall (27) of the connecting chamber (19), and **in that** the area of the lid facing it and surrounding the push-in member (18) has an annular groove (34) for sealingly accommodating the gasket or the thicker part of the gasket.

12. Braking system according to one of claims 1 to 11, **characterised in that** in the compensating container (14) is inserted an elastic bellows (30) that is preferably formed by a rubber elastic moulding and comprises at least one encircling side flange as a gasket (31) between the compensating container (14) and the lid (17).

13. Braking system according to claim 12, **characterised in that** the elastic bellows (30) is hollow, particularly of tub-shaped construction with an encircling seal (31) around its opening edge, and **in that** a bellows venting opening (32) is provided which preferably passes through the lid (17) of the compensating container.

14. Braking system according to claim 12 or 13, **characterised in that** the underside of the bellows (30) at least in the filling and venting position of the transmitter system (2) forms a sloping guide surface to the ventilating point at the filling and venting opening (15),

15. Braking system according to one of claims 1 to 14, **characterised in that** an in particular elastic closure stopper (35) preferably having a cone or a sealing screw is provided for closing off the filling and venting opening (15).

16. Braking system according to one of claims 1 to 15, **characterised in that** a venting and filling tool (23) has a connecting member (22) or similar connecting element for inserting into the filling and venting opening (15, 16) to form a seal.

17. Braking system according to claim 16, **characterised in that** the connecting member (22) of the venting and filling tool (23) has a Luer cone (24) or a Luer lock and **in that** the filling and venting opening (15) or the push-in member (18) thereof is designed to fit the connecting member (22).

18. Braking system according to claim 16 or 17, **characterised in that** the venting and filling tool (23) has a piston-cylinder arrangement.

19. Braking system according to one of claims 16 to 18, **characterised in that** the venting and filling tool (23) is a standard commercial syringe.

20. Braking system according to one of claims 16 to 19, **characterised in that** the venting and filling tool (23) is integrated in the transmitter system (2).

21. Braking system according to one of claims 1 to 20, **characterised in that** the braking device (4) comprises a filling and venting opening (16) which is constructed for releasably attaching the venting and filling tool (23) and preferably for insertion thereof to form a seal.

22. Braking system according to one of claims 1 to 21, **characterised in that** the filling and venting opening (15) has a push-in member (18) with a receiving cone (25) and **in that** the closure stopper (35) has an outer cone that fits it and an insertion cavity, accessible from outside, as a tool engagement point for a rotating tool.

23. Braking system according to claim 22, **characterised in that** the insertion cavity of the closure stopper (35) is constructed as a hexagonal socket for an Allen key as the rotating tool.

24. Braking system according to claim 22 or 23, **characterised in that** the closure stopper (35) inserted in the filling and venting opening (15) terminates substantially flush with the opening of the push-in member (18) or the lid.

25. Braking system according to one of claims 22 to 24, **characterised in that** the closure stopper (35) is made of hard plastics material.

26. Braking system according to one of claims 22 to 25, **characterised in that** the outer cone of the closure stopper (35) corresponds to a Luer cone.

27. Braking system according to one of claims 1 to 26, **characterised in that** the transmitter system (2) is connected to a part of the vehicle, preferably the handlebars, by means of a clamp (28) which is designed to move the transmitter system at least into a filling and venting position (15) and an operating position.

28. Braking system according to claim 1, **characterised in that** the at least one overflow opening (21) from the connecting chamber (19) to the compensating container (14) is provided in the lid (17).

29. Braking system according to claim 1, **characterised in that** the at least one overflow opening (21 a) from the connecting chamber (19) to the compensating container (14) is provided in a gasket (31) between the lid (17) and the compensating container (14).

30. Braking system according to claim 29, **characterised in that** the overflow opening(s) (21 a) provided in the gasket (31) is or are constructed, in their region extending over the boundary wall (27), as an open-edged groove with its opening facing the boundary wall.

31. Braking system according to claim 29 or 30, **characterised in that** the gasket (31) is thicker at least in the region making contact with the boundary wall (27) of the connecting chamber (19) and comprises at that point the at least one open-edged, more particularly groove-shaped overflow opening (21a).

32. Braking system according to one of claims 29 to 31, **characterised in that** the gasket (31) with the at least one overflow opening (21 a) is the encircling side flange of the flexible bellows (30a).

## Revendications

1. Système de freinage avec une installation de freinage hydraulique (1) pour des véhicules à deux roues, en particulier des bicyclettes, sachant que l'installation de freinage présente un système distributeur (2) rempli de liquide hydraulique et un dispositif de freinage (4) hydrauliquement relié au système distributeur (2) sachant que le système distributeur présente un réservoir de compensation (14) et une ouverture (15) de remplissage et de purge d'air, qui présente une partie d'insertion (18) disposée dans un couvercle (17) du réservoir de compensation (14) pour recevoir en étanchéité un outil (23) de purge d'air et de remplissage, **caractérisé en ce qu'**une chambre de raccordement (19) fait suite dans la direction d'insertion à la partie d'insertion (18) dans le boîtier de distributeur (20), chambre qui possède une paroi de délimitation latérale (27) vers le réservoir de compensation (14), et **en ce qu'**au moins une ouverture de trop-plein (21) ouverte sur le bord, menant au réservoir de compensation (14), est prévue dans la paroi de délimitation (27) ou dans un élément complémentaire reposant sur la paroi de délimitation.

2. Système de freinage selon la revendication 1, **caractérisé en ce que** la partie d'insertion (18) de l'ouverture (15) de remplissage et de purge d'air est conçue pour recevoir en étanchéité un embout de raccordement (22) de l'outil de purge d'air et de remplissage, **en ce que** l'embout de raccordement (22), en position de raccordement, s'enfonce dans la chambre de raccordement (19) réalisée notamment en forme de cuvette, et **en ce que** la chambre de raccordement (19) présente des dimensions intérieures de passage qui sont plus grandes que la partie enfoncée de l'embout de raccordement (22).

3. Système de freinage selon la revendication 1 ou 2, **caractérisé en ce que** l'ouverture de trop-plein (21) ouverte sur le bord dans la paroi de délimitation (27) de la chambre de raccordement (19) est disposée, en position de service du système distributeur (2), dans une région distante du point le plus haut de la paroi de délimitation latérale (27).

4. Système de freinage selon l'une des revendications 1 à 3, **caractérisé en ce que** deux ouvertures de trop-plein (21) ouvertes sur le bord, qui sont disposées de préférence en étant approximativement opposées, sont prévues dans la paroi de délimitation (27).

5. Système de freinage selon l'une des revendications 1 à 4, **caractérisé en ce que** la ou les ouvertures de trop-plein (21) disposées dans la paroi de délimitation (27) de la chambre de raccordement (19) est ou sont réalisées sous forme de fente marginale étroite, et **en ce que** la largeur de fente est dimensionnée de manière à retenir les bulles d'air contenues dans le liquide hydraulique.

6. Système de freinage selon l'une des revendications 1 à 5, **caractérisé en ce que** le couvercle (17), recouvrant le réservoir de compensation (14) et reposant en étanchéité par son bord sur le boîtier (20), présente sur le côté du réservoir de compensation (14) la partie d'insertion (18) pour l'outil de purge d'air et de remplissage, et **en ce que** la chambre de raccordement (19) en forme de cuvette, qui fait suite dans la direction d'insertion, se trouve dans le boîtier de distributeur (20).

7. Système de freinage selon l'une des revendications 1 à 6, **caractérisé en ce que** la chambre de raccordement (19) de l'ouverture (15) de remplissage et de purge d'air est disposée dans un renflement (26) du boîtier de distributeur (20) qui fait saillie dans le réservoir de compensation (14).

8. Système de freinage selon l'une des revendications 1 à 7, **caractérisé en ce que**, dans la position de remplissage et de purge d'air du système distributeur (2), l'ouverture (15) de remplissage et de purge d'air est disposée sur le côté le plus haut, à côté du réservoir de compensation (14).

9. Système de freinage selon l'une des revendications 1 à 8, **caractérisé en ce que** l'ouverture (15) de remplissage et de purge d'air est disposée dans la région du couvercle (17) qui recouvre le réservoir de compensation (14), **en ce que** la partie d'insertion (18) traverse le couvercle (17), et **en ce que** la chambre de raccordement (19) qui fait suite en étanchéité dans la direction d'insertion dans le boîtier de distributeur (20) se trouve dans une saillie du boîtier située à l'intérieur du réservoir de compensation (14).

10. Système de freinage selon l'une des revendications 1 à 9, **caractérisé en ce qu'**un joint d'étanchéité (31) est prévu entre le réservoir de compensation (14) et le couvercle (17) qui le ferme en étanchéité sur le dessus, joint qui s'étend dans la région située entre la partie d'insertion (18) et la chambre de raccordement (19) de l'ouverture (15) de remplissage et de purge d'air qui fait suite à ladite partie.

11. Système de freinage selon la revendication 10, **caractérisé en ce que** le joint d'étanchéité (31) est épaissi au moins dans la région d'application sur la paroi de délimitation (27) de la chambre de raccordement (19), et **en ce que** la région du couvercle qui est tournée vers lui et qui entoure la partie d'insertion (18) possède une rainure annulaire (34) destinée à recevoir en étanchéité le joint d'étanchéité ou plus précisément la région épaissie du joint d'étanchéité.

12. Système de freinage selon l'une des revendications 1 à 11, **caractérisé en ce qu'**un soufflet élastique (30) est installé dans le réservoir de compensation (14), soufflet qui est de préférence formé par un corps façonné ayant l'élasticité du caoutchouc et qui présente au moins une bride latérale périphérique comme joint d'étanchéité (31) entre le réservoir de compensation (14) et le couvercle (17).

13. Système de freinage selon la revendication 12, **caractérisé en ce que** le soufflet élastique (30) est réalisé creux, en particulier en forme de cuvette avec un joint d'étanchéité périphérique (31) sur le bord d'ouverture, et **en ce qu'**il est prévue une ouverture d'aération de soufflet (32), qui traverse de préférence le couvercle (17) du réservoir de compensation.

14. Système de freinage selon la revendication 12 ou 13, **caractérisé en ce que** le dessous du soufflet (30) forme, au moins dans la position de remplissage et de purge d'air du système distributeur (2), une surface de guidage oblique vers le point de purge d'air pour l'ouverture (15) de remplissage et de purge d'air.

15. Système de freinage selon l'une des revendications 1 à 14, **caractérisé en ce qu'**un bouchon de fermeture (35) notamment élastique, pourvu de préférence d'un cône ou d'une vis étanche, est prévu pour fermer l'ouverture (15) de remplissage et de purge d'air.

16. Système de freinage selon l'une des revendications 1 à 15, **caractérisé en ce qu'**un outil (23) de purge d'air et de remplissage possède un embout de raccordement (22) ou un élément de raccordement similaire, à insérer en étanchéité dans l'ouverture (15, 16) de remplissage et de purge d'air.

17. Système de freinage selon la revendication 16, **caractérisé en ce que** l'embout de raccordement (22) de l'outil (23) de purge d'air et de remplissage présente un cône Luer (24) ou un verrouillage Luer Lock, et **en ce que** l'ouverture (15) de remplissage et de purge d'air ou plus précisément sa partie d'insertion (18) est conçue de manière adaptée à l'embout de raccordement (22).

18. Système de freinage selon la revendication 16 ou 17, **caractérisé en ce que** l'outil (23) de purge d'air et de remplissage présente un ensemble piston-cylindre.

19. Système de freinage selon l'une des revendications 16 à 18, **caractérisé en ce que** l'outil (23) de purge d'air et de remplissage est une seringue de type courant.

20. Système de freinage selon l'une des revendications 16 à 19, **caractérisé en ce que** l'outil (23) de purge d'air et de remplissage est intégré dans le système distributeur (2).

21. Système de freinage selon l'une des revendications 1 à 20, **caractérisé en ce que** le dispositif de freinage (4) présente une ouverture (16) de remplissage et de purge d'air qui est conçue pour le raccordement amovible de l'outil (23) de purge d'air et de remplissage et de préférence pour son insertion en étanchéité.

22. Système de freinage selon l'une des revendications 1 à 21, **caractérisé en ce que** l'ouverture (15) de remplissage et de purge d'air présente une partie d'insertion (18) pourvue d'un cône récepteur (25), et **en ce que** le bouchon de fermeture (35) possède un cône extérieur adapté au précédent, ainsi qu'une cavité d'insertion accessible de l'extérieur comme point de prise pour un outil de vissage.

23. Système de freinage selon la revendication 22, **caractérisé en ce que** la cavité d'insertion du bouchon de fermeture (35) est réalisée sous forme de six pans creux pour une clé six pans comme outil de vissage.

24. Système de freinage selon la revendication 22 ou 23, **caractérisé en ce que** le bouchon de fermeture (35) inséré dans l'ouverture (15) de remplissage et de purge d'air assure la fermeture environ à surface plane avec l'ouverture de la partie d'insertion (18) ou du couvercle.

25. Système de freinage selon l'une des revendications 22 à 24, **caractérisé en ce que** le bouchon de fermeture (35) est réalisé en matière plastique dure.

26. Système de freinage selon l'une des revendications 22 à 25, **caractérisé en ce que** le cône extérieur du bouchon de fermeture (35) correspond à un cône Luer.

27. Système de freinage selon l'une des revendications 1 à 26, **caractérisé en ce que** le système distributeur (2) est assemblé au moyen d'un support (28) à un élément du véhicule à deux roues, de préférence au guidon, support qui est conçu pour déplacer le système distributeur (2) au moins dans une position (15) de remplissage et de purge d'air et dans une position de service.

28. Système de freinage selon la revendication 1, **caractérisé en ce que** l'ouverture de trop-plein au moins unique (21), menant de la chambre de raccordement (19) au réservoir de compensation (14), est prévue dans le couvercle (17).

29. Système de freinage selon la revendication 1, **caractérisé en ce que** l'ouverture de trop-plein au moins unique (21a), menant de la chambre de raccordement (19) au réservoir de compensation (14), est prévue dans un joint d'étanchéité (31) entre le couvercle (17) et le réservoir de compensation (14).

30. Système de freinage selon la revendication 29, **caractérisé en ce que** la ou les ouvertures de trop-plein (21a) prévues dans le joint d'étanchéité (31) est ou sont réalisées sous forme de rainure ouverte sur le bord dans sa région recouvrant la paroi de délimitation (27), rainure dont l'ouverture est tournée vers la paroi de délimitation.

31. Système de freinage selon la revendication 29 ou 30, **caractérisé en ce que** le joint d'étanchéité (31) est épaissi au moins dans la région d'application sur la paroi de délimitation (27) de la chambre de raccordement (19), et il présente dans cette région l'ouverture de trop-plein au moins unique (21a) ouverte sur le bord, notamment en forme de rainure.

32. Système de freinage selon l'une des revendications 29 à 31, **caractérisé en ce que** la bride latérale périphérique du soufflet élastique (30a) constitue le joint d'étanchéité (31) pourvu de l'ouverture de trop-plein au moins unique (21a).
